(19) **Europäisches Patentamt**
**European Patent Office**
**Office européen des brevets**

(11) **EP 3 731 548 A1**

(12) **EUROPEAN PATENT APPLICATION**

(43) Date of publication:
**28.10.2020 Bulletin 2020/44**

(21) Application number: **19000197.4**

(22) Date of filing: **24.04.2019**

(51) Int Cl.:
*H04W 4/60* (2018.01)     *H04W 4/50* (2018.01)
*H04W 8/24* (2009.01)     *H04L 29/08* (2006.01)
*H04W 8/18* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Giesecke+Devrient Mobile Security
GmbH
81677 München (DE)**

(72) Inventors:
• **Grobholz, Mario
  81373 München (DE)**
• **Muddaiah, Sharath
  85598 Baldham (DE)**
• **Tea, Vui Huang
  12061 Stockholm (SE)**

Remarks:
Amended claims in accordance with Rule 137(2)
EPC.

(54) **DISTRIBUTION OF INSTRUCTION SET MODULES**

(57)    The present invention is directed towards a method for distribution of instruction set modules to a requesting Universal Integrated Circuit Card. The provided technical teaching provides the advantage that instruction sets, so-called applets, can be distributed to SIM cards without a necessity to hold specific Mobile Network Operator rights and consequently, a marketplace for applets can be provided. In this context pre-established profiles are provided, which are as such static but they contain such a variety of options of downloadable content that the user recognizes such profiles as dynamic profiles. The present invention is furthermore directed towards a system arrangement for distribution of instruction set modules, which is arranged to perform the suggested method. Moreover, a computer program product is provided with instructions being able to perform the suggested method and operate the suggested system.

Fig. 10

**Description**

The present invention is directed towards a method for distribution of instruction set modules to a requesting Universal Integrated Circuit Card. The provided technical teaching provides the advantage that instruction sets, so-called applets, can be distributed to SIM cards without a necessity to hold specific Mobile Network Operator rights and consequently, a marketplace for applets can be provided. In this context pre-established profiles are provided, which are as such static but they contain such a variety of options of downloadable content that the user recognizes such profiles as dynamic profiles. The present invention is furthermore directed towards a system arrangement for distribution of instruction set modules, which is arranged to perform the suggested method. Moreover, a computer program product is provided with instructions being able to perform the suggested method and operate the suggested system.

Specification, handling and configurations of SIM cards are commonly known and are for instance specified in the document "GlobalPlatform- Card specification" which is available in several versions, for instance version 2.1.1 made available in March 2003. The document "GlobalPlatform-card specification 2.1.1" can be obtained from the website of GlobalPlatform Inc. The respective internet address is www.GlobalPlatform.org. Any terminology introduced in the present application shall be in conformance with underlying typical standards such as provided by the GlobalPlatform Inc. unless indicated otherwise.

EP 2 975 870 A1 teaches an electronic device comprising a processor connected to a memory, which is configured to execute at least one instruction to search accessible communication service providers based on a Subscriber Identification Module SIM.

US 9,226,133 B1 teaches a method for managing device profiles comprising the steps of adding at least one alternative primary profile to a memory module.

US 9,204,300 B2 teaches a method of providing a Subscriber Identification Module SIM profile to an embedded Universal Integrated Circuit Card eUICC device.

It is commonly known in the art to provide a so-called AppStore, which provides a user interface for downloading applets. Any third party may upload applications to such an AppStore and the users are presented respective contents and are able to choose specific applets. Afterwards the selected applets are downloaded to a mobile end device or a static computer system and can be executed. However, problems arise in case specific hardware requirements are present and moreover, it is of disadvantage in case specific rights are required for downloading and installing content.

Some applications are relevant regarding restrictive security levels and consequently safety measures have to be implemented. As a result commonly known AppStores may no longer be used and sophisticated solutions have to be provided.

It is commonly known in the art to apply and manage SIM cards as secure elements such as exchangeable SIM cards or embedded SIM cards. Embedded SIM cards are known as eSIM cards or embedded Universal Integrated Circuit Cards eUICC. Such SIM cards provide special security mechanisms such as a highly secured operating environment comprising a processor and memories. In case applets shall be downloaded and executed by a SIM card specific rights are required.

As SIM cards are specially secured such rights are typically owned by the Mobile Network Operator MNO. Consequently, due to security reasons third parties are not allowed to provide respective platforms for sharing instruction sets which are to be installed on such highly secured hardware.

Summarizing this issue there is the problem that commonly known infrastructures do not allow the distribution of instruction set modules to a requesting Universal Integrated Circuit Card as specific rights are required and consequently, there is a need for a novel method and system which allows the implementation of such a marketplace, which is still secure and reliable in any situation.

It is an object of the present invention to provide an improved method for distribution of instruction set modules to a requesting Universal Integrated Circuit Card which can be easily implemented and can be operated on a SIM card without violating specific privileges such as access rights. Moreover, it is an object of the present invention to provide a respectively arranged system for performing the method and likewise a computer program product shall be suggested providing instructions for performing the method and operating the suggested system.

The object is solved by features of the independent claims. Further advantages are provided by dependent claims.

Accordingly, a method for distribution of instruction set modules to a requesting Universal Integrated Circuit Card using personalized profiles is suggested comprising the steps of providing the instruction set modules by means of a server unit and selecting at least one of the provided instruction set modules for transmittance to the requesting Universal Integrated Circuit Card, wherein merging a network subscription of the requesting Universal Integrated Circuit Card with a pre-stored profile template is performed, thereby creating a personalized profile, wherein the pre-stored profile template reflects the selected instruction set module.

The present invention relies on Universal Integrated Circuit Cards which can be exchangeable or embedded. The Universal Integrated Circuit Card of present invention is not necessarily shaped as card or not limited to card formats as such. The Universal Integrated Circuit Card of present invention can be also configured as chip module which is of various shape and is integrated in an electronic device, for example in an IoT (Internet-of-Things) device. The Universal Integrated Circuit Card of present invention can be also configured as iUICC (integrated Universal Integrated Circuit Card). Hence, the present invention addresses so-called UICCs or eUICCs or iUICCs or eSIMs. The technical teaching addresses any format of SIM card and can be implemented to fulfill respective requirements. The distribution of instruction set modules refers to the provision of applications or applets which are provided using a server system and can be accessed by a Universal Integrated Circuit Card.

The usage of the Universal Integrated Circuit Card along with the server unit implies further hardware components such as a mobile telecommunication infrastructure along with a respective user device. The user device is typically a cell phone or any comparable hardware device such as a tablet computer or a notebook. The Universal Integrated Circuit Card is connected to the user device and consequently, any steps regarding communication are performed using further components such as wireless telecommunication interfaces of the mobile phone, for instance.

The basic underlying idea is to provide un-personalized profiles which cover any selection of applications and consequently, the user, in this case the Universal Integrated Circuit Card, can be provided with respective configurations, which are downloadable using respective profiles. According to the present invention commonly known profiles are enhanced as commonly known profiles typically comprise operator data related to the subscription. The subscription is required as the mobile end device needs to communicate with the underlying communication infrastructure. This is performed using subscription data which is handled by the Mobile Network Operator along with the mobile phone.

One of the contributions of the present invention is that such commonly known profiles are enhanced such that they contain a number of selected applications and consequently, those profiles can be provided to the user along with the specific selection of applets.

In a preliminary step the provided technical teaching suggests to form any combination of possible application selections and store them in specific profiles. Afterwards the user selects the required application combination and will be provided with the respective profile. Consequently, in a preliminary step respective un-personalized profiles are created which reflect any possible combination of selectable applications. This provides the advantage that afterwards the user will find a respective profile matching the specific selection. As a result the provided profile appears to be personalized to the specific needs of the user although they are pre-stored.

As any possible combination pre-stored respective profiles are statically defined but from the user's point of view they seem to be dynamic as the specific required profile is available, which is selected afterwards. Once the user has selected the required applications the matching profile is selected and transferred to the user. The cell phone can then install the obtained profile meaning that the obtained applications are installed and consequently, the SIM card is able to implement the downloaded content. Applications or applets may also be called instruction set modules. Finally, the chosen modules are installed on the SIM card. This results in a marketplace for applications to be installed on a SIM card without necessity of obtaining specific Mobile Network Operator rights. Using such profiles a third party can install respective modules on the SIM card and consequently, provide a respective marketplace.

As the applications have to be downloaded by the Universal Integrated Circuit Card the instruction set modules, namely the applications, are provided by means of a server unit. This implies further network components such as a communication infrastructure. The instruction set modules are provided by third parties and are offered for download by the suggested method. Hence, the user can select which instruction set modules are desired.

The user selects at least one of the provided instruction set modules, which are to be downloaded to the end device, which includes the Universal Integrated Circuit Card. Any combination of offered applications can be demanded by the user. As the Universal Integrated Circuit Card is subscribed to the network the respective network subscription is re-used and it is merged with a pre-stored profile template. Hence, the commonly known profile is enhanced such that further applications are attached and a personalized profile package results. The profile package includes the commonly known subscription profile along with the specifically selected applications. The pre-stored profile template is one template out of several templates which cover all combinations of available instruction set modules. Consequently, a variety of pre-stored un-personalized profiles are provided in advance each un-personalized profile forming one profile template. The pre-stored profile template reflects the selected instruction set module and consequently, upon selection, is called a personalized profile.

Summarizing this issue un-personalized profiles are in a preliminary step created and as the un-personalized profiles contain each profile which can be demanded the specific personalized profile can be selected. Consequently, an un-personalized profile template becomes the personalized profile upon selection. In this way the profiles are provided in a static fashion as each profile reflects one possible combination. The user selects one combination and consequently, the matching un-personalized profile is selected. As the user has the feeling that such a profile reflecting the specific selections is created dynamically, the chosen un-personalized profile becomes the personalized profile reflecting specific user requirements. Moreover, the personal subscription is added and consequently, a personalized profile results.

This personalized profile, comprising the subscription profile, and the instruction set module combination, is downloaded by the user and consequently, the instruction set modules being part of the personalized profile can be deployed.

According to an aspect of the present invention transmitting the personalized profile to the requesting Universal Integrated Circuit Card is performed. This provides the advantage that the SIM card obtains the requested instruction set modules for instance using a wireless communication path. The step of transmitting the personalized profile can be performed over-the-air such that the Universal Integrated Circuit Card downloads the personalized profile or the server uploads the respective information.

According to a further aspect of the present invention un-personalized profiles are provided as templates, which reflect any possible instruction set module selection. This provides the advantage that the personalized profile is always available as a variety of profiles is created covering all possibilities. Consequently, as the un-personalized profiles cover any combination of instruction set module selections the specific personalized profile can always be computed.

According to a further aspect of the present invention selecting at least one of the provided instruction set modules implies the selection of one of the un-personalized profile templates, which reflects the instruction set module selection. This provides the advantage that un-personalized profile templates can be computed in a preliminary step and afterwards the required profile template is chosen to represent the personalized profile. This makes sure that a personalized profile can be provided at any time as the personalized profile is at least in part always available as the respective data can be generated in advance among which the user selects a specific profile, which then forms the personalized profile at least in part.

According to a further aspect of the present invention the personalized profile comprises at least one instruction set module and/or a link to at least one instruction set module. This provides the advantage that the application can be directly contained in the profile or at least information is provided which allows the Universal Integrated Circuit Card to download the respective instruction set module or the instruction set modules. In this way the application can be provided directly using the profile or indirectly by provisioning of a download information.

According to a further aspect of the present invention the personalized profile is provided to the requesting Universal Integrated Circuit Card. This provides the advantage that the Universal Integrated Circuit Card can download the personalized profile or at least obtain information such as an activation code which enables the transmittance of required data.

According to a further aspect of the present invention an existing profile on the Universal Integrated Circuit Card is replaced by the personalized profile. This provides the advantage that existing configurations can be updated and consequently, already installed applications can be updated or specifically the selection of applications can be updated. This makes sure that management of applets on the SIM module is made possible.

According to a further aspect of the present invention a maximum profile size is provided and the pre-stored profile templates do not exceed the provided maximum profile size. This provides the advantage that only those profiles are offered for download which can indeed be installed on the SIM card. The storage size of the SIM card is limited and consequently, the number of provided templates can be decreased in case the provided templates are too big. In case the size of the template exceeds the available storage on the end device such a profile can be deleted and is not offered for download.

According to a further aspect of the present invention the pre-stored profile templates comprise dynamic applets. This provides the advantage that again the number of templates to be provided is reduced and instead the user is able to download dynamic applets reducing the number of overall profiles.

According to a further aspect of the present invention a hierarchy of instruction set modules is provided, wherein at least a first instruction set module depends on at least one second instruction set module. This provides the advantage that segmentation of the profiles can be performed and consequently, the profiles can be provided in part such that a first part of the profile depends on a further part. This reduces the number of combinations and hence it can be specified that a specific instruction set module has to be downloaded before a further instruction set module is downloaded. Again, the complexity and the number of provided profiles is reduced.

According to a further aspect of the present invention instruction set modules are adapted to be operable on a specific Universal Integrated Circuit Card. This provides the advantage that applications provided in any programming language can be operated on the specific type of the underlying Universal Integrated Circuit Card. In this way development kits are enhanced and specific translation techniques can be applied such that a first programming language is transformed into a second programming language such that potentially incompatible programming code is transformed such that it can be executed on the specific Universal Integrated Circuit Card.

According to a further aspect of the present invention profile management is performed applying issuer security domain root privileges. This provides the advantage that rights are used to gain access to the storage of the Universal Integrated Circuit Card and consequently, the ISD-R works around the ISD-P. It may be required that the user requires specific root keys and consequently, ISD-R can be accessed.

According to a further aspect of the present invention the instruction set module comprises instructions for at least one of mobile marketing, mobile ID and/or Quality of Service. This provides the advantage that specific applications can be provided, wherein the applications are not limited to such examples.

The object is also solved by a system arrangement for distribution of instruction set modules to a requesting Universal Integrated Circuit Card using personalized profiles, comprising an interface unit arranged to provide the instruction set modules by means of a server unit and an input means arranged to select at least one of the provided instruction set modules for transmittance to their requesting Universal Integrated Circuit Card, wherein a processor unit is provided arranged to merge a network subscription of the requesting Universal Integrated Circuit Card with a pre-stored profile template, thereby being arranged to create a personalized profile, wherein the pre-stored profile template reflects the selected instruction set module.

The suggested system arrangement implies further components, such as network components and specific storage means. Moreover, the Universal Integrated Circuit Card is typically integrated in a mobile device.

The object is also solved by a computer program product comprising instructions being arranged to perform the suggested method and operate the suggested system.

According to the present invention it is of advantage that the method comprises method steps which can likewise be implemented by functionality of the structural features of the system arrangement. Moreover, the system arrangement holds structural features which provide functionality being similar to the suggested method steps. Consequently, the suggested method is able to operate the system arrangement and the system arrangement is able to perform the suggested method.

Further advantages of the present invention are demonstrated with reference to the accompanying figures, which show:

Fig. 1:     the suggested system arrangement for distribution of instruction set modules according to an aspect of the present invention;

Fig. 2:     tables introducing SIM types and form factors which can be used according to the present invention;

Fig. 3:     a table showing eSIM module components which can be used according to an aspect of the present invention;

Fig. 4:     tables introducing eSIM profile configurations which can be used according to an aspect of the present invention;

Fig. 5:     tables introducing types of applets and development kits which can be used according to an aspect of the present invention;

Fig. 6:     tables introducing applets sizes, variants and versions which can be used according to an aspect of the present invention;

Fig. 7:     a table showing applet suitability with SIM types according to an aspect of the present invention;

Fig. 8:     a table referring to and demonstrating an aspect of downloads of third party applets;

Fig. 9:     tables introducing further aspects of applet downloads according to the present invention;

Fig. 10:    a sequence diagram depicting aspects of the method for distribution of instruction set modules according to the present invention;

Fig. 11:    a table introducing an aspect of profile management according to the present invention;

Fig. 12:    tables demonstrating aspects of profiles according to the present invention;

Fig. 13:    a table introducing aspects of un-personalized profiles for motivating the present invention;

Fig. 14:    a table depicting a threshold referring to a maximum file size according to an aspect of the present invention;

Fig. 15:    a table introducing aspects of a tiered system according to a further aspect of the present invention;

Fig. 16:    a table depicting an aspect of remote applet management according to an aspect of the present invention;

Fig. 17:    a table depicting an aspect of remote Wiblet management according to an aspect of the present invention; and

Fig. 18:  a schematic flowchart diagram depicting an aspect of the method for distribution for instruction set modules according to an aspect of the present invention.

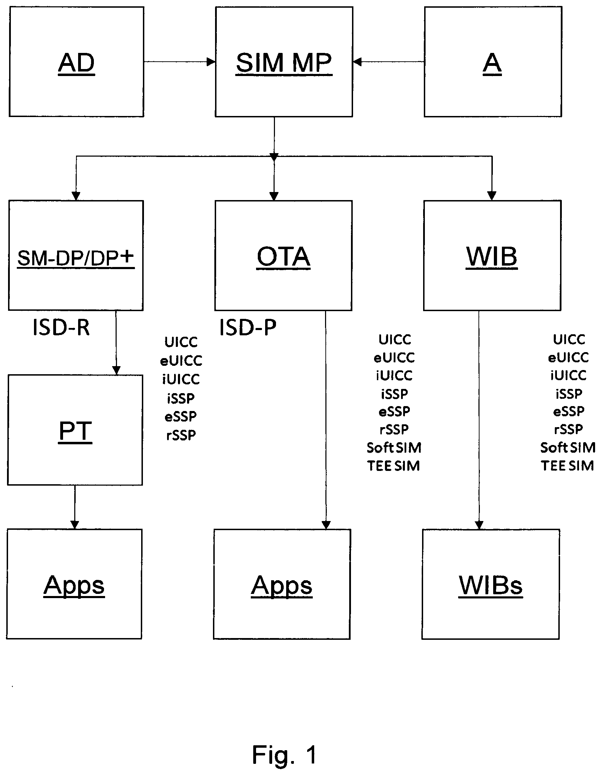

Fig. 1 shows a system architecture which may be used by the suggested system arrangement according to an aspect of the present invention, wherein on the left side in the top row an Application Development AD is introduced, in the middle of the top row a SIM Marketplace SIM MP is introduced and on the right side of the top row Admin A is depicted. In the next row a Subscription Manager-Data Preparation SM-DP is depicted, in the middle an Over-the-Air interface OTA is provided and on the right side a WIB is provided according to the WIB standard.

Below these features, namely in the third row, a Profile Template and respectively, Profile Templates PT are depicted. In the last row applets Apps are shown along with Wiblets WIBs are shown. In the first column an arrow is illustrated using ISD-R which refers to issuer security domain-root and regarding the OTA interface ISD-P may be used, which refers to issuer security domain-root. Furthermore, several form factors are depicted, which may be used according to the present invention such as Universal Integrated Circuit Card UICC along with embedded Universal Integrated Circuit Card eUICC.

The SIM is used for network authentication and access to traditional cellular networks (2G/3G/4G/5G) as well as emerging low power, wide area networks (EC-GSM-IoT, LTE-M and NB-IoT). Furthermore, MNO and 3rd party SIM application can be downloaded and run on it. The SIM Marketplace is an eco-system like the known app store with a similar business model. This begins by offering 3rd parties a possibility to create SIM applets using a set of development toolkits. SIM Marketplace then verifies the 3rd party applets and makes them available for download for any industry (e.g. M2M, consumer, automotive etc.), across the MNO's and verticals independently of any SIM form factor. In general IoT stands for internet of things.

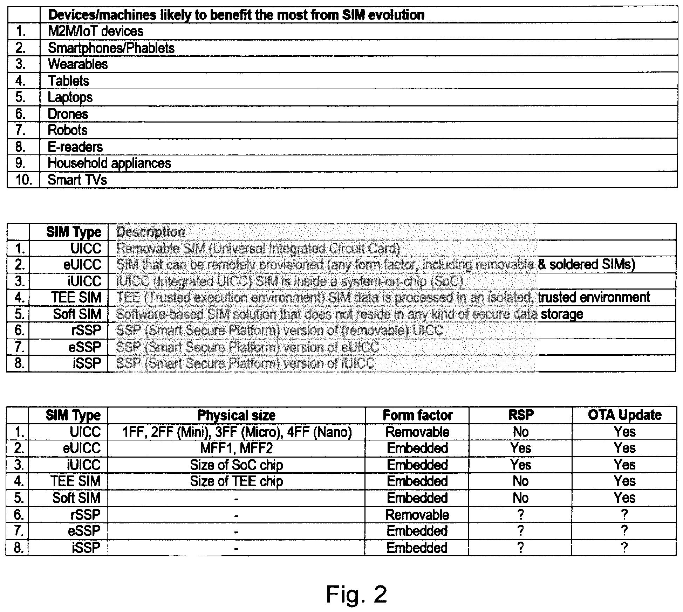

Fig. 2 shows form factors and SIM types, which may be used according to the present invention. The respective tables are self-explanatory.

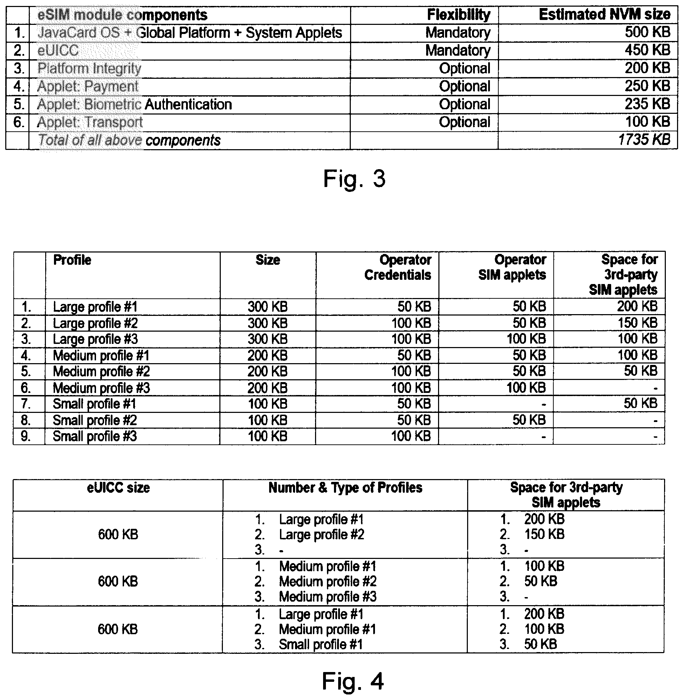

Fig. 3 shows SIM module types according to an aspect of the present invention. Like UICC, eUICC has a broad range of characteristics. Primarily in NVM (non-volatile memory for installing applications), RAM (random access memory for the applications to perform its computations) and clock speed (processing capability and power). These characteristics determine and limit what, which type and how many applications can be installed on the eUICC.

Fig. 4 depicts aspects of eSIM profile configurations, which may be used according to the present invention. Specific profiles are shown, which do not yet provide respective applications. There are many eUICC manufacturers. Each of them has several models of eSIM modules of different setup, configuration, storage and memory sizes. The app store will need to know total, free and available space on the eSIM module to determine if an SIM application can be downloaded and installed on the eSIM module.

The memory of a eUICC can range from several KB to several MB. There is no specific limit on the number of Profiles that can be stored on a eUICC, this depends only on memory available and the size of Profiles. Operators could manage Profile sizes to fit them in the eUICC. Operators can define Profile configurations to optimize operation with different eUICCs embedded in devices. The GSMA Remote SIM Provisioning allows an 'eligibility check' of the eUICC and device capabilities to permit creation and download of an appropriate Profile.

A Profile may comprise of the operator data related to a subscription:

- Operator credentials / subscription
- Operator SIM applets
- 3rd-party SIM applets

A profile of the same size can have different configurations; this affects the number of size of applets that can be downloaded to these profiles. An example distribution is shown in Fig. 4.

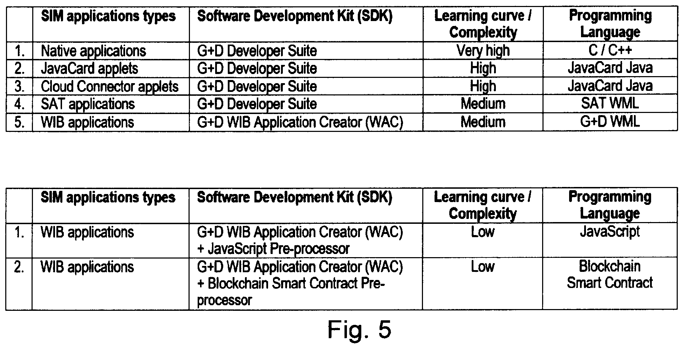

Fig. 5 shows types of applets and development kits, wherein G+D refers to an exemplary company performing the suggested method or operating the suggested system arrangement.

Native C is very closely tied to SIM card platforms and make the resulting application not portable. The problem with these is that the WML language is from the WAP-era and no longer in wide-usage. The dialect of Java used in JavaCard is very different from Java used in PC and servers. Consequently there are very few developers in the world who know how to develop applications with that language. Its obscurity also discourages anyone from learning it.

To remedy this, the innovation is to introduce pre-processors to the development kits according to an aspect of the present invention. This allows the 3rd-party developers to code with familiar and modern programming language, while still using the card system without any modifications. The pre-processors convert the modern programming languages into the original programming language that is supported by the development kits. For example:

# JavaScript > G+D WML > WIB applications

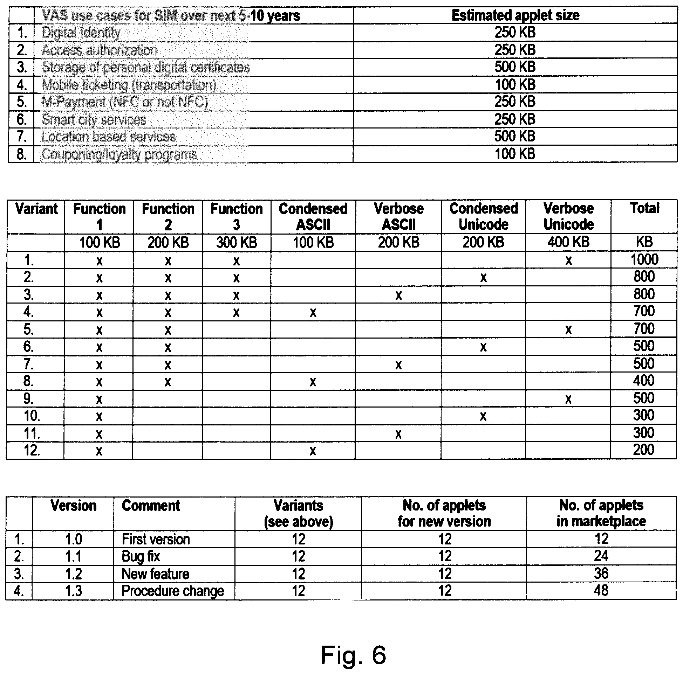

Fig. 6 shows applets sizes and variants along with respective versions. As the SIM vary tremendously in size, performance and capacity, it is impossible for one applet to neither fit into nor work with all the SIM variety. The end-users market may also differ in language and regional requirements as well. Consequently, the applet developers will need to develop multiple variants and versions of their applets to accommodate this. The SIM Marketplace will organize and track these details.

An example of an applet adjustment strategy, this would apply for each version of the applet, is shown in the second and third table of Fig. 6. Note that old versions may not be removable from the marketplace as the server components of the service provider for some end-users may not support new versions of the applets.

In some cases, the SIM Marketplace may not have RFM (Remote File Management) access to the end-user SIM. If so, then there will be no follow-up OTA-RFM option to neither download nor create any custom SIM DF/EF files for the applet. Hence ideally, the applet should have dependency on custom DF/EF files, nor rely on OTA updates. The data should be stored inside the applet's data store.

In some cases, the SIM Marketplace is limited by OTA-RAM transport mechanism. For example the SIM only supports 8-bit Data SM download and not BIP/HTTP-OTA download. In those cases, the applet size is limited to 5KB or less.

For RSP, the applets in the profiles are not personalized with application keys, hence the applet would need to perform some form of OBKG (on-board key generation) if it wishes to do application-based client authentication to its SP (service provider).

SIM applets are very dependent on the SIM configuration, functions, features, storage size, memory size and performance. As resources are limited on a SIM card, a SIM applet may not be able to function in conjunction with other SIM applets in the same profile.

SIM applets can also be very dependent on the characteristics and features of the ME (mobile equipment) that is working with. The ME can be changeable or permanent, depending on the SIM type. In the former, an applet could work when it is first downloaded, but stop after a device switch and vice versa. In the later, the applet will either permanently function or not function with the device as it cannot be changed. This could in some cases be changed when the ME has a firmware update that enables SIM supporting functions that didn't exist before.

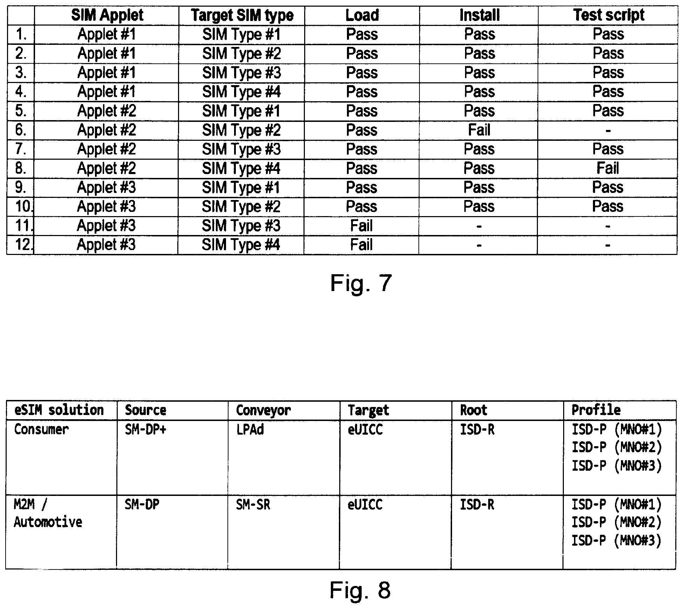

Fig. 7 shows the applet suitability with SIM types and especially whether specific applets are suitable for specific SIM types. In case compatibility is reached the table indicates "pass" and in case no compatibility is present "fail" is introduced.

According to an aspect of the present invention the SIM Marketplace would need to have a detailed record of the characteristics and properties of all SIM cards that it intends to support. With detailed SIM applet requirements description form the 3rd-party developer, the SIM applet could be verified on paper. However, this is prone to human error and typing mistakes. A trustworthy mechanism is to electrically load and install the applet into all the target SIMs, and run a test script to verify that it is responding as expected.

Verifying if an applet can co-exist with another applet would be much more complicated as the permutation would be exponentially huge. This test could be reserved only for applets that are meant for wide deployment.

Fig. 8 describes the download of third party applets and especially refers to remote application management. RAM (Remote Application Management) on a UICC card includes the ability to load, install, and remove applications. This management is under the control of the ISD (Issuer Security Domain) or any Security Domain with delegated management privileges as described in GlobalPlatform Card Specification. In general, this would be ISD-P (Issuer Security Domain - Profile) and the MNO OTA keys. If this is not available, then the SIM Marketplace could manipulate the RSP profile containing the applets. Hence, for JavaCard-based applets, there are two solutions, one for ISD-P access and one for ISD-R (Root) access:

- ISD-P is a secure container for the hosting of a Profile
- ISD-R is responsible for creation of new ISD-Ps and lifecycle management of all ISD-Ps

The SIM Marketplace may or may not have ISD-P (Profile) and the MNO OTA keys privileges. If the SIM Marketplace is entrusted with the OTA keys by the MNO, the SIM Marketplace can perform direct OTA update of the SIM using its own OTA system. However, in most cases, the MNO would have their separate OTA servers. In such cases, the SIM Marketplace would have to indirectly manage the applets on the SIM via integration to the MNO's OTA servers, e.g. via server-to-server API calls. The SIM Marketplace would have to integrate with each that it would to offer its service to.

The SIM Marketplace may or may not have ISD-R (Root) privileges. If the SIM Marketplace is entrusted with the ISD-R (Root) by the MNO, the SIM Marketplace can perform direct profile manipulation using its own OTA system. However, in some cases, the MNO would have their separate RSP servers. In such cases, the SIM Marketplace would have to indirectly manage the profiles (containing the applets) on the SIM via integration to the MNO's RSP servers, e.g. via server-to-server API calls. According to GSMA, there are 17 RSP SM-DP+ providers. The SIM Marketplace would have to integrate with one SM-DP+ and each SM-DP that it would to offer its service to. The table in Fig. 8 is a high-level representation of the main RSP system elements.

Throughout this description the following legend applies:

- SM-DP (Subscription Manager - Data Preparation)
- SM-DP+ (Subscription Manager - Data Preparation +)
- SM-DS (Subscription Manager - Discovery Server)
- SM-SR (Subscription Manager - Secure Routing)
- LPA (Local Profile Assistant)

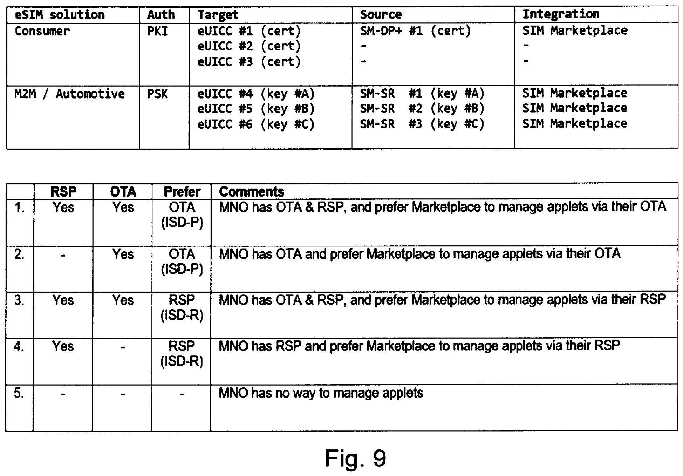

Fig. 9 shows aspects regarding privacy management and respective certificates. Both architectures use Pre-Shared Key (PSK) and Public Key Infrastructure (PKI) based cryptography. However, for the M2M solution authentication with the SM-SR uses PSK and only allows a single SM-SR to communicate with the eUICC. For the Consumer solution, the PKI based authentication is used and therefore any eUICC and SM-DP+ can connect so long as they share the same root PKI certificate. Even if an MNO have both RSP and OTA systems, it may prefer the SIM Marketplace to use only one preferred mechanism. The consequences are depicted in the second table of Fig. 9.

With GSMA Remote SIM Provisioning (RSP), there are no traditional SIM cards. Instead there is an embedded SIM (called an eUICC), which may be soldered inside the mobile device, that can accommodate multiple SIM Profiles - each Profile comprising of the operator and subscriber data that would have otherwise been stored on a traditional SIM card. A Profile comprises of the operator data related to a subscription, including the operator's credentials and operator or 3rd-party SIM-based applications. Should the end-user wish to change operator, they can set up a contract with the new operator, and download the new Profile. The end-user is now able to switch between the two Profiles, to connect their device to whichever operator's network the end-user selects.

The eUICC structure consists of a hierarchy of different security domains being assigned with specific access rights and privileges. The root of all eUICC accesses is the ISD-R (issuer security domain - root). This is the only way to create new ISD-P (issuer security domain - profile) instances as a container for a given mobile operator's profile. Access to the profile data within such a container is restricted to the profile owner that means the MNO.

eSIM operators like G+D (example for a company applying the inventive teachings) would like to offer an applet marketplace, but they are not able to as the eSIM module setup is such that only an MNO OTA system can download and install applets to the eSIM. To offer applet download, the eSIM operator would have to manage or have access to all the MNO's OTA system, which is logistically and technically complex.

The solution is to inventively utilize the existing systems and standard to offer an eSIM application marketplace. This is possible via an ingenious off-card, back-end generation and management of a matrix of profile templates (un-personalized profiles) containing various combinations of applets, and matching the exact profile to the end-user's selection of applets.

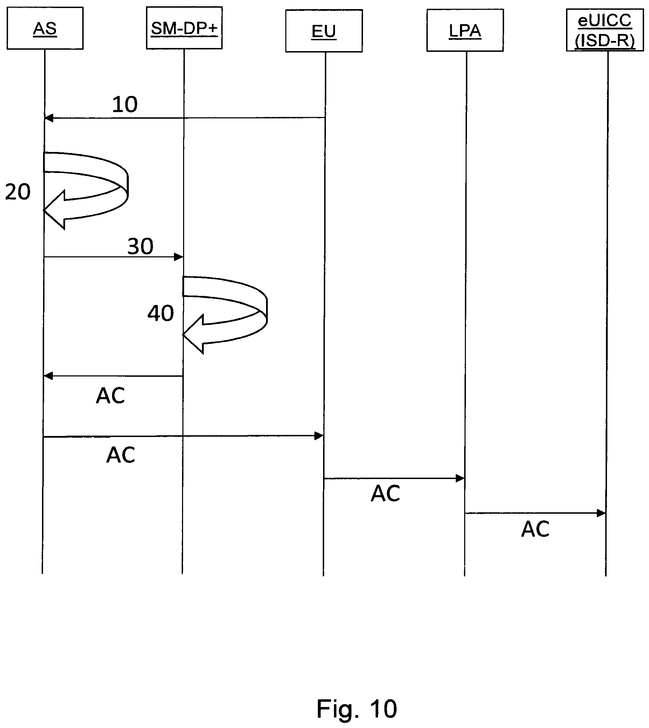

Fig. 10 shows an aspect of the suggested method and especially refers to an AppStore AS, the End User EU, a Local Profile Assistant LPA and the SIM card on the right side. In Fig. 10 several steps are indicated such as step 10, namely the addition and/or removal of applets upon request from the end user. Step 20 shows the step of mapping an applet selection to a profile template and step 30 shows the request of a profile with selected profile template. Step 40 shows that the end user subscription is moved to the selected profile template. In the following steps the transmittance of an activation code AC is depicted. ISD-R is responsible for the creation of new ISD-Ps and the life cycle management of all ISD-Ps. ISD-P is a secure container (security domain) for the hosting of a profile.

According to an aspect of the present invention management (addition/removal) of the applets from the eSIM module is achieved by deleting the existing profile (with the old applet selections) from the eUICC, moving and merging the end-user's subscription with the corresponding profile template (with the new applet selections), and downloading the resulting new personalized profile to the eUICC.

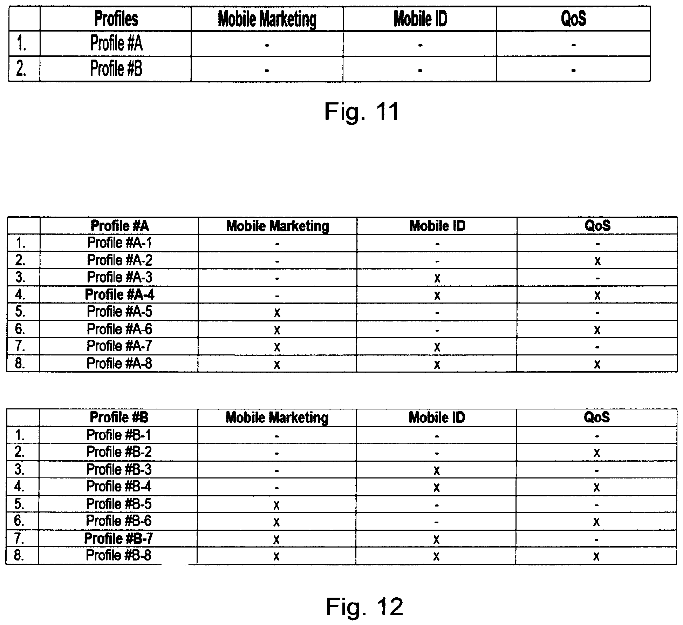

Fig. 11 shows aspects of commonly known profiles, which can be used according to the present invention. Currently there is no option in RSP to download applets. The end-user can only select a subscription.

Please select your eSIM subscription: [X] Profile #A, [_] Profile #B

If the end-user selects subscription "Profile #A", then the SM-DP+ will be instructed by the portal to download personalized "Profile #A" to the end-user's eSIM module.

Fig. 12 shows two tables, which demonstrate the provided technical teaching according to an aspect of the present invention. Each table shows a number of un-personalized profiles, wherein all combinations of selected applications are introduced. The applications are mobile marketing, mobile ID, and Quality of Service QoS. As can be seen throughout both tables the combinations for any profile A or B are introduced. Hence, all combinations are stored in a preliminary step and the user is able to select a specific profile.

For instance, the first table may be the case where the user selects profile A-4 and consequently, the fourth row is selected. The user desires to obtain mobile ID and Quality of Service. Consequently, a personalized profile, namely profile A-4, is already present and can be transmitted to the user. Hence, each table shows 8 un-personalized profiles, wherein respectively one profile is chosen and accordingly forms the personalized profile. The same holds through for the second table, where specific applications referring to profile B arc selected.

Currently any applet to be offered with a profile has to be included in the profile before it is downloaded. There is no follow-up OTA option to download it, nor ability to create any custom SIM DF/EF files for the applet. Hence the applet cannot have dependency on custom DF/EF files, nor rely on OTA updates. The solution is to map the end-user's choice of applets with pre-packaged profiles. E.g., to offer end-user a choice of two profiles with a selection of three applets, we prepare 16 un-personalized profiles in the back-end.

Please select your eSIM subscription:           [X] Profile #A, [_] Profile #B
Please select eSIM applications to download:   [_] Mobile Marketing, [X] Mobile ID, [X] QoS

If the end-user selects subscription "Profile #A" plus applets 'Mobile ID' and 'QoS', then SM-DP+ will be instructed by SIM Marketplace to download a personalized "Profile #A-4" to the end-user's eSIM module.

Please select your eSIM subscription        : [_] Profile #A, [X] Profile #B
Please select eSIM applications to download  : [X] Mobile Marketing, [X] Mobile ID, [_] QoS

If the end-user selects subscription "Profile #B" plus the applets 'Mobile Marketing' & 'Mobile ID', then the SM-DP+ will be instructed by the SIM Marketplace to download a personalized "Profile #B-7" to the end-user's eS-IM module.

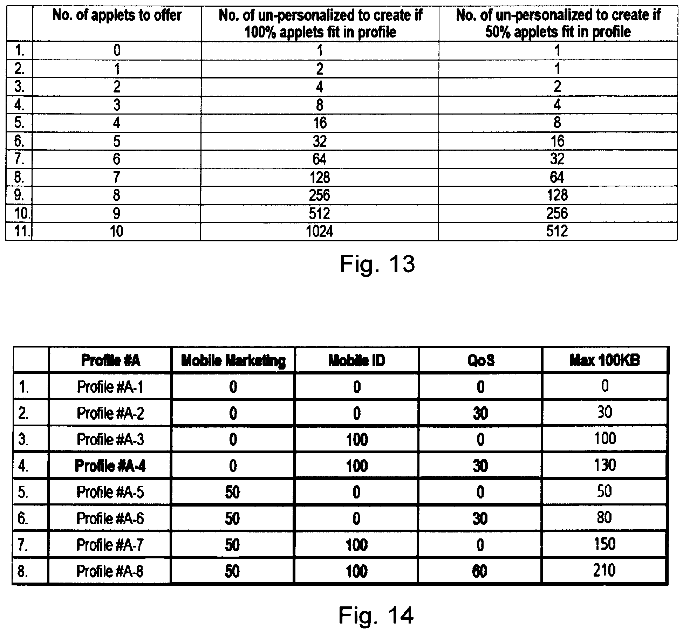

Fig. 13 depicts a further motivation towards the suggested method, namely that the number of un-personalized profiles drastically increases with the number of applets to be offered. This shows that upon offering 10 applets the overall number of profiles amounts to 1024. This poses a problem because of the extensive number of profiles and accordingly, the suggested method teaches mechanisms to reduce the number of profiles to be created.

Fig. 14 shows a table enabling the suggested method to decrease the number of required profiles according to an aspect of the present invention. In this example a threshold is provided referring to a maximum file size being introduced in the last column. All file sizes exceeding such a threshold are not considered and consequently, the respective profile is not offered for download. The number of un-personalized profiles to create can be reduced by eliminating all combinations that exceed the available applet space of the profile. As shown below, the un-personalized profiles that exceed the maximum size and marked red does not need to be generated as it will never be used. In this case, only 5 out of 8 (or 62.5%) un-personalized profiles need to be generated.

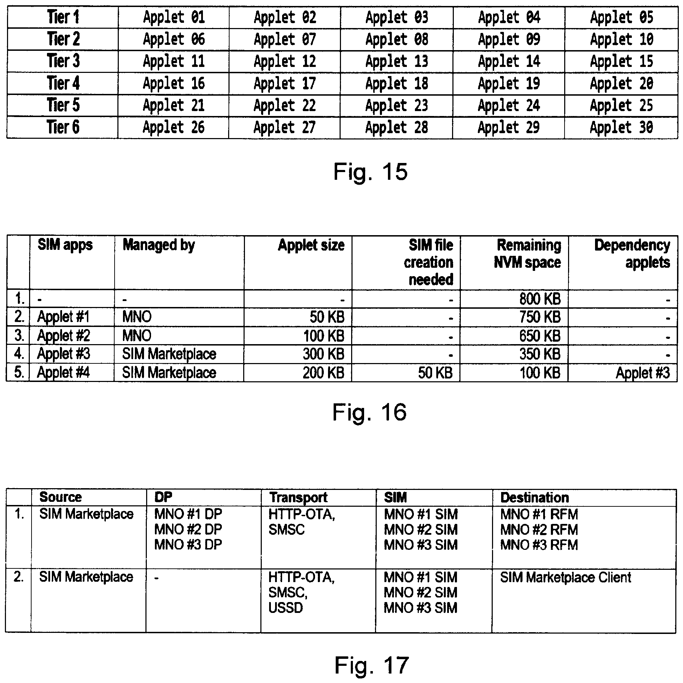

Fig. 15 shows a further possibility to decrease the number or required profiles. A tiered system can be used to enable the SIM Marketplace to offer more applets than can be dynamically downloaded. Such that the end-user has to purchase all the applets in one tier before that can purchase applets from the next tier. The applets in the prior tier would become static applets in the profile. For example, to offer 30 applets to SIM that handles 5 dynamically selectable applets:

Assuming 100% applets fit in the profile, 32 profile templates would be needed for 5 dynamically selected applets. Spread across 6 tiers, 30 applets would require 32x6=192 profile templates. In the example below, applets 01-10 are static applets, and applet 12 & applet 15 are dynamic applets.

Fig. 16 shows the remote applet management according to a further aspect of the present invention. If the SIM Marketplace is performing RAM by directly running an OTA system, or indirectly by connecting to an MNO OTA system, it has to check the available free space in the SIM as the SIM could be dynamically modified (e.g. 3rd-party or dependent applets may have been added or removed) after personalization. There is no guarantee that an applet can be downloaded and installed successfully.

The following example illustrates RAM sequence for a SIM via OTA. The SIM's personalized profile has 800 KB NVM free space. In step #2 & step #3, the MNO downloads 2 applets totaling 150 KB, leaving 650 KB NVM free. The end user goes to SIM Marketplace and selects to download Applet #4 (200 KB). This is theory should leave 450 KB NVM free space, however this is not the case as Applet #4 has dependencies that need to be downloaded as well (if the SIM already has the Applet #3, then step #4 is not needed).

What happens according to an aspect of the present invention is step #4, in which SIM Marketplace will first download and install dependency Applet #3 (300 KB), leaving 350 KB free NVM. After that in goes to step #5, in which SIM Marketplace download and install the requested Applet #4 (200 KB). However, Applet #4 requires custom file creation as well; hence SIM Marketplace will use OTA-RFM to create the necessary SIM files (50 KB). In the end, the SIM has only 100 KB free NVM instead of 450KB.

Typically an applet can be downloaded successfully to the SIM if the transport mechanism is functioning, and there is sufficient NVM space to download the applet into the SIM. The applet installation could subsequently fail if there is insufficient RAM space, missing SIM files or missing dependencies. For missing dependencies, the SIM Marketplace could download these as well in addition to the requested applet, assuming there is sufficient NVM on the SIM. For missing files, ideally the applet should store the data internally instead of on external SIM files. If this cannot be avoided, then the SIM Marketplace may need to run its own, or have access to the MNO's OTA-RFM (Remote File Management) system.

The applet installation could also fail because it may be incompatible or cannot co-exist with other applets (e.g. using the same resources, same AID name, same filename for different contents etc). It would be difficult for the SIM Marketplace to be aware of applets that is not managed by it. One solution is for all RAM to the SIM be exclusively managed by SIM Marketplace and no other party.

## SIM Marketplace > MNO #1 OTA-RFM > MNO #1 SIM #1

## SIM Marketplace > MNO #1 OTA-RAM > MNO #1 SIM #1

Fig. 17 shows remote Wiblet management according to an aspect of the present invention. In WIB, an application is a Wiblet, and a Wiblet is the compiled byte code from a complete WML document (source code). Normally (#1) in an isolated MNO cases, a G+D DP (Delivery Platform) is used to perform OTA download and management of the Wiblets via RFM directly to the SIM. To offer services to the various MNOs, one approach is for the SIM Marketplace to integrate with each MNO's DP system. An alternative (#2) is to introduce a layer of abstraction that bypasses the need to integrate with any DP system, whereby SIM Marketplace download and manage the Wiblets via a SIM Marketplace Client running in the SIM.

The SIM Marketplace Client according to an aspect of the present invention communicates directly with the SIM Marketplace to download the Wiblets. This eliminates the need for SIM Marketplace to integrate with any MNO DP, allowing for quick roll-out and faster market reach. The SIM Marketplace Client utilizes 'executeWiblet' element, the PAD plug-in and a multilevel menu to achieve this work-around.

In WIB 2.0, the 'executeWiblet' element is used to start execution of a Wiblet stored in the 'srcvar' variable. There is a possibility to verify the MAC (message authentication code) before execution. In this case the MAC key (0-7) to be used can be specified. There is also a WIB 1.3 emulation of this feature for older, deployed SIM in the market.

The Wiblet is an opaque object that can be downloaded via SMS, USSD and IP. The Wiblets can be downloaded and stored on the SIM card via the PAD plug-in. The PAD plug-in is a powerful data management plug-in that can be seen as an on-card database. Since memory is limited, it is important that an application using *PAD clearly states it maximum memory need to ensure that applications do not fail due to lack of storage space. The plug-in is used to create, read, update, and delete privileged application data stored in a SIM card. The data object is an octet string with any hexadecimal value.

WIB is the common term used for SmartTrust Wib. It is an interpreter which provides an execution environment for wiblets and a mechanism for management of menu-based services. A Wiblet is an application executed in the SmartTrust Wib runtime platform.

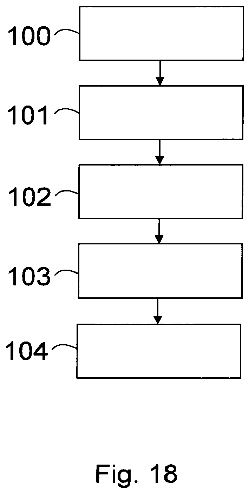

Fig. 18 shows a schematic flowchart diagram depicting an aspect of the suggested method for distribution of instruction set modules to a requesting Universal Integrated Circuit Card using personalized profiles, comprising the steps of providing 100 the instruction set modules by means of a server unit and selection 102 at least one of the provided 100 instruction set modules for transmittance to the requesting Universal Integrated Circuit Card, wherein merging 103 a network subscription of the requesting Universal Integrated Circuit Card with a pre-stored 101 profile template is performed, thereby creating a personalized profile, wherein the pre-stored 101 profile template reflects the selected 102 instruction set module. In a further step transmitting 104 the personalized profile to the requesting Universal Integrated Circuit Card is performed.

The person skilled in the art recognized that the aforementioned method steps can be performed iteratively and/or in a different order. Furthermore, the provided steps may comprise sub-steps.

**Claims**

1. A method for distribution of instruction set modules to a requesting Universal Integrated Circuit Card (UICC) using personalized profiles, comprising the steps:

   - providing (100) the instruction set modules by means of a server unit; and
   - selecting (102) at least one of the provided (100) instruction set modules for transmittance to the requesting Universal Integrated Circuit Card (UICC), **characterized in that** merging (103) a network subscription of the requesting Universal Integrated Circuit Card (UICC) with a pre-stored (101) profile template is performed, thereby creating a personalized profile, wherein the pre-stored (101) profile template reflects the selected (102) instruction set module.

2. The method according to claim 1, **characterized in that** transmitting (104) the personalized profile to the requesting Universal Integrated Circuit Card (UICC) is performed.

3. The method according to claim 1 or 2, **characterized in that** un-personalized profiles are provided as templates, which reflect any possible instruction set module selection.

4. The method according to any one of the preceding claims, **characterized in that** selecting (102) at least one of the provided (100) instruction set modules implies the selection of one of the un-personalized profile templates, which reflects the instruction set module selection.

5. The method according to any one of the preceding claims, **characterized in that** the personalized profile comprises at least one instruction set module and/or a link to at least one instruction set module.

6. The method according to any one of the preceding claims, **characterized in that** the personalized profile is provided to the requesting Universal Integrated Circuit Card (UICC).

7. The method according to any one of the preceding claims, **characterized in that** an existing profile on the Universal Integrated Circuit Card (UICC) is replaced by the personalized profile.

8. The method according to any one of the preceding claims, **characterized in that** a maximum profile size is provided and the pre-stored (101) profile templates do not exceed the provided maximum profile size.

9. The method according to any one of the preceding claims, **characterized in that** the pre-stored (101) profile templates comprise dynamic applets.

10. The method according to any one of the preceding claims, **characterized in that** a hierarchy of instruction set modules is provided, wherein at least a first instruction set module depends on at least one second instruction set module.

11. The method according to any one of the preceding claims, **characterized in that** instruction set modules are adapted to be operable on a specific Universal Integrated Circuit Card (UICC).

12. The method according to any one of the preceding claims, **characterized in that** profile management is performed applying Issuer Security Domain Root privileges.

13. The method according to any one of the preceding claims, **characterized in that** the instruction set module comprises instructions for at least one of mobile marketing, mobile ID and/or Quality of Service.

14. A system arrangement for distribution of instruction set modules to a requesting Universal Integrated Circuit Card (UICC) using personalized profiles, comprising:

    - an interface unit arranged to provide (100) the instruction set modules by means of a server unit; and
    - an input means arranged to select (102) at least one of the provided (100) instruction set modules for transmittance to the requesting Universal Integrated Circuit Card (UICC), **characterized in that** a processor unit is provided arranged to merge (103) a network subscription of the requesting Universal Integrated Circuit Card (UICC) with a pre-stored (101) profile template, thereby being arranged to create a personalized profile, wherein the pre-stored (101) profile template reflects the selected (102) instruction set module.

15. A computer program product being arranged to perform a method in accordance with any one of the preceding claims 1 to 13, when being executed on a computer.

**Amended claims in accordance with Rule 137(2) EPC.**

1. A method for distribution of instruction set modules to a requesting Universal Integrated Circuit Card (UICC) using personalized profiles, **characterized by**:

   - providing (100) all combinations of the instruction set modules as pre-stored profile templates by means of a server unit; and
   - selecting (102) at least one of the provided (100) instruction set modules for transmittance to the requesting Universal Integrated Circuit Card (UICC), wherein merging (103) a network subscription of the requesting Universal Integrated Circuit Card (UICC) with one pre-stored (101) profile template is performed by attaching the selected (102) at least one instruction set module to the network subscription, thereby creating a personalized profile, wherein the pre-stored (101) profile template comprises the selected (102) at least one instruction set module.

2. The method according to claim 1, **characterized in that** transmitting (104) the personalized profile to the requesting Universal Integrated Circuit Card (UICC) is performed.

3. The method according to claim 1 or 2, **characterized in that** un-personalized profiles are provided as templates, which comprise any possible instruction set module selection.

4. The method according to any one of the preceding claims, **characterized in that** the personalized profile is provided to the requesting Universal Integrated Circuit Card (UICC).

5. The method according to any one of the preceding claims, **characterized in that** an existing profile on the Universal Integrated Circuit Card (UICC) is replaced by the personalized profile.

6. The method according to any one of the preceding claims, **characterized in that** a maximum profile size is provided and the pre-stored (101) profile templates do not exceed the provided maximum profile size.

7. The method according to any one of the preceding claims, **characterized in that** the pre-stored (101) profile templates comprise dynamic applets.

8. The method according to any one of the preceding claims, **characterized in that** a hierarchy of instruction set modules is provided, wherein at least a first instruction set module depends on at least one second instruction set module.

9. The method according to any one of the preceding claims, **characterized in that** instruction set modules are adapted to be operable on a specific Universal Integrated Circuit Card (UICC) by transforming a first programming language into a second programming language.

10. The method according to any one of the preceding claims, **characterized in that** profile management is performed applying Issuer Security Domain Root privileges.

11. The method according to any one of the preceding claims, **characterized in that** the instruction set module comprises instructions for at least one of mobile marketing, mobile ID and/or Quality of Service.

12. A system arrangement for distribution of instruction set modules to a requesting Universal Integrated Circuit Card (UICC) using personalized profiles, **characterized by**:

   - an interface unit arranged to provide (100) all combinations of the instruction set modules as pre-stored profile templates by means of a server unit; and
   - an input means arranged to select (102) at least one of the provided (100) instruction set modules for transmittance to the requesting Universal Integrated Circuit Card (UICC), wherein a processor unit is provided arranged to merge (103) a network subscription of the requesting Universal Integrated Circuit Card (UICC) with one pre-stored (101) profile template by attaching the selected (102) at least one instruction set module to the network subscription, thereby being arranged to create a personalized profile, wherein the pre-stored (101) profile template comprises the selected (102) at least one instruction set module.

13. A computer program product being arranged to perform a method in accordance with any one of the preceding claims 1 to 11, when being executed on a computer.

Fig. 1

| | Devices/machines likely to benefit the most from SIM evolution |
|---|---|
| 1. | M2M/IoT devices |
| 2. | Smartphones/Phablets |
| 3. | Wearables |
| 4. | Tablets |
| 5. | Laptops |
| 6. | Drones |
| 7. | Robots |
| 8. | E-readers |
| 9. | Household appliances |
| 10. | Smart TVs |

| | SIM Type | Description |
|---|---|---|
| 1. | UICC | Removable SIM (Universal Integrated Circuit Card) |
| 2. | eUICC | SIM that can be remotely provisioned (any form factor, including removable & soldered SIMs) |
| 3. | iUICC | iUICC (Integrated UICC) SIM is inside a system-on-chip (SoC) |
| 4. | TEE SIM | TEE (Trusted execution environment) SIM data is processed in an isolated, trusted environment |
| 5. | Soft SIM | Software-based SIM solution that does not reside in any kind of secure data storage |
| 6. | rSSP | SSP (Smart Secure Platform) version of (removable) UICC |
| 7. | eSSP | SSP (Smart Secure Platform) version of eUICC |
| 8. | iSSP | SSP (Smart Secure Platform) version of iUICC |

| | SIM Type | Physical size | Form factor | RSP | OTA Update |
|---|---|---|---|---|---|
| 1. | UICC | 1FF, 2FF (Mini), 3FF (Micro), 4FF (Nano) | Removable | No | Yes |
| 2. | eUICC | MFF1, MFF2 | Embedded | Yes | Yes |
| 3. | iUICC | Size of SoC chip | Embedded | Yes | Yes |
| 4. | TEE SIM | Size of TEE chip | Embedded | No | Yes |
| 5. | Soft SIM | - | Embedded | No | Yes |
| 6. | rSSP | - | Removable | ? | ? |
| 7. | eSSP | - | Embedded | ? | ? |
| 8. | iSSP | - | Embedded | ? | ? |

# Fig. 2

| | eSIM module components | Flexibility | Estimated NVM size |
|---|---|---|---|
| 1. | JavaCard OS + Global Platform + System Applets | Mandatory | 500 KB |
| 2. | eUICC | Mandatory | 450 KB |
| 3. | Platform Integrity | Optional | 200 KB |
| 4. | Applet: Payment | Optional | 250 KB |
| 5. | Applet: Biometric Authentication | Optional | 235 KB |
| 6. | Applet: Transport | Optional | 100 KB |
| | Total of all above components | | 1735 KB |

## Fig. 3

| | Profile | Size | Operator Credentials | Operator SIM applets | Space for 3rd-party SIM applets |
|---|---|---|---|---|---|
| 1. | Large profile #1 | 300 KB | 50 KB | 50 KB | 200 KB |
| 2. | Large profile #2 | 300 KB | 100 KB | 50 KB | 150 KB |
| 3. | Large profile #3 | 300 KB | 100 KB | 100 KB | 100 KB |
| 4. | Medium profile #1 | 200 KB | 50 KB | 50 KB | 100 KB |
| 5. | Medium profile #2 | 200 KB | 100 KB | 50 KB | 50 KB |
| 6. | Medium profile #3 | 200 KB | 100 KB | 100 KB | - |
| 7. | Small profile #1 | 100 KB | 50 KB | - | 50 KB |
| 8. | Small profile #2 | 100 KB | 50 KB | 50 KB | - |
| 9. | Small profile #3 | 100 KB | 100 KB | - | - |

| eUICC size | Number & Type of Profiles | Space for 3rd-party SIM applets |
|---|---|---|
| 600 KB | 1. Large profile #1<br>2. Large profile #2<br>3. - | 1. 200 KB<br>2. 150 KB<br>3. - |
| 600 KB | 1. Medium profile #1<br>2. Medium profile #2<br>3. Medium profile #3 | 1. 100 KB<br>2. 50 KB<br>3. - |
| 600 KB | 1. Large profile #1<br>2. Medium profile #1<br>3. Small profile #1 | 1. 200 KB<br>2. 100 KB<br>3. 50 KB |

## Fig. 4

| | SIM applications types | Software Development Kit (SDK) | Learning curve / Complexity | Programming Language |
|---|---|---|---|---|
| 1. | Native applications | G+D Developer Suite | Very high | C / C++ |
| 2. | JavaCard applets | G+D Developer Suite | High | JavaCard Java |
| 3. | Cloud Connector applets | G+D Developer Suite | High | JavaCard Java |
| 4. | SAT applications | G+D Developer Suite | Medium | SAT WML |
| 5. | WIB applications | G+D WIB Application Creator (WAC) | Medium | G+D WML |

| | SIM applications types | Software Development Kit (SDK) | Learning curve / Complexity | Programming Language |
|---|---|---|---|---|
| 1. | WIB applications | G+D WIB Application Creator (WAC) + JavaScript Pre-processor | Low | JavaScript |
| 2. | WIB applications | G+D WIB Application Creator (WAC) + Blockchain Smart Contract Pre-processor | Low | Blockchain Smart Contract |

# Fig. 5

| | VAS use cases for SIM over next 5-10 years | Estimated applet size |
|---|---|---|
| 1. | Digital Identity | 250 KB |
| 2. | Access authorization | 250 KB |
| 3. | Storage of personal digital certificates | 500 KB |
| 4. | Mobile ticketing (transportation) | 100 KB |
| 5. | M-Payment (NFC or not NFC) | 250 KB |
| 6. | Smart city services | 250 KB |
| 7. | Location based services | 500 KB |
| 8. | Couponing/loyalty programs | 100 KB |

| Variant | Function 1 | Function 2 | Function 3 | Condensed ASCII | Verbose ASCII | Condensed Unicode | Verbose Unicode | Total |
|---|---|---|---|---|---|---|---|---|
| | 100 KB | 200 KB | 300 KB | 100 KB | 200 KB | 200 KB | 400 KB | KB |
| 1. | x | x | x | | | | x | 1000 |
| 2. | x | x | x | | | x | | 800 |
| 3. | x | x | x | | x | | | 800 |
| 4. | x | x | x | x | | | | 700 |
| 5. | x | x | | | | | x | 700 |
| 6. | x | x | | | | x | | 500 |
| 7. | x | x | | | x | | | 500 |
| 8. | x | x | | x | | | | 400 |
| 9. | x | | | | | | x | 500 |
| 10. | x | | | | | x | | 300 |
| 11. | x | | | | x | | | 300 |
| 12. | x | | | x | | | | 200 |

| | Version | Comment | Variants (see above) | No. of applets for new version | No. of applets in marketplace |
|---|---|---|---|---|---|
| 1. | 1.0 | First version | 12 | 12 | 12 |
| 2. | 1.1 | Bug fix | 12 | 12 | 24 |
| 3. | 1.2 | New feature | 12 | 12 | 36 |
| 4. | 1.3 | Procedure change | 12 | 12 | 48 |

# Fig. 6

| | SIM Applet | Target SIM type | Load | Install | Test script |
|---|---|---|---|---|---|
| 1. | Applet #1 | SIM Type #1 | Pass | Pass | Pass |
| 2. | Applet #1 | SIM Type #2 | Pass | Pass | Pass |
| 3. | Applet #1 | SIM Type #3 | Pass | Pass | Pass |
| 4. | Applet #1 | SIM Type #4 | Pass | Pass | Pass |
| 5. | Applet #2 | SIM Type #1 | Pass | Pass | Pass |
| 6. | Applet #2 | SIM Type #2 | Pass | Fail | - |
| 7. | Applet #2 | SIM Type #3 | Pass | Pass | Pass |
| 8. | Applet #2 | SIM Type #4 | Pass | Pass | Fail |
| 9. | Applet #3 | SIM Type #1 | Pass | Pass | Pass |
| 10. | Applet #3 | SIM Type #2 | Pass | Pass | Pass |
| 11. | Applet #3 | SIM Type #3 | Fail | - | - |
| 12. | Applet #3 | SIM Type #4 | Fail | - | - |

Fig. 7

| eSIM solution | Source | Conveyor | Target | Root | Profile |
|---|---|---|---|---|---|
| Consumer | SM-DP+ | LPAd | eUICC | ISD-R | ISD-P (MNO#1) ISD-P (MNO#2) ISD-P (MNO#3) |
| M2M / Automotive | SM-DP | SM-SR | eUICC | ISD-R | ISD-P (MNO#1) ISD-P (MNO#2) ISD-P (MNO#3) |

Fig. 8

| eSIM solution | Auth | Target | Source | Integration |
|---|---|---|---|---|
| Consumer | PKI | eUICC #1 (cert)<br>eUICC #2 (cert)<br>eUICC #3 (cert) | SM-DP+ #1 (cert)<br>-<br>- | SIM Marketplace<br>-<br>- |
| M2M / Automotive | PSK | eUICC #4 (key #A)<br>eUICC #5 (key #B)<br>eUICC #6 (key #C) | SM-SR #1 (key #A)<br>SM-SR #2 (key #B)<br>SM-SR #3 (key #C) | SIM Marketplace<br>SIM Marketplace<br>SIM Marketplace |

|  | RSP | OTA | Prefer | Comments |
|---|---|---|---|---|
| 1. | Yes | Yes | OTA (ISD-P) | MNO has OTA & RSP, and prefer Marketplace to manage applets via their OTA |
| 2. | - | Yes | OTA (ISD-P) | MNO has OTA and prefer Marketplace to manage applets via their OTA |
| 3. | Yes | Yes | RSP (ISD-R) | MNO has OTA & RSP, and prefer Marketplace to manage applets via their RSP |
| 4. | Yes | - | RSP (ISD-R) | MNO has RSP and prefer Marketplace to manage applets via their RSP |
| 5. | - | - | - | MNO has no way to manage applets |

## Fig. 9

Fig. 10

| | Profiles | Mobile Marketing | Mobile ID | QoS |
|---|---|---|---|---|
| 1. | Profile #A | - | - | - |
| 2. | Profile #B | - | - | - |

## Fig. 11

| | Profile #A | Mobile Marketing | Mobile ID | QoS |
|---|---|---|---|---|
| 1. | Profile #A-1 | - | - | - |
| 2. | Profile #A-2 | - | - | x |
| 3. | Profile #A-3 | - | x | - |
| 4. | **Profile #A-4** | - | x | x |
| 5. | Profile #A-5 | x | - | - |
| 6. | Profile #A-6 | x | - | x |
| 7. | Profile #A-7 | x | x | - |
| 8. | Profile #A-8 | x | x | x |

| | Profile #B | Mobile Marketing | Mobile ID | QoS |
|---|---|---|---|---|
| 1. | Profile #B-1 | - | - | - |
| 2. | Profile #B-2 | - | - | x |
| 3. | Profile #B-3 | - | x | - |
| 4. | Profile #B-4 | - | x | x |
| 5. | Profile #B-5 | x | - | - |
| 6. | Profile #B-6 | x | - | x |
| 7. | **Profile #B-7** | x | x | - |
| 8. | Profile #B-8 | x | x | x |

## Fig. 12

| | No. of applets to offer | No. of un-personalized to create if 100% applets fit in profile | No. of un-personalized to create if 50% applets fit in profile |
|---|---|---|---|
| 1. | 0 | 1 | 1 |
| 2. | 1 | 2 | 1 |
| 3. | 2 | 4 | 2 |
| 4. | 3 | 8 | 4 |
| 5. | 4 | 16 | 8 |
| 6. | 5 | 32 | 16 |
| 7. | 6 | 64 | 32 |
| 8. | 7 | 128 | 64 |
| 9. | 8 | 256 | 128 |
| 10. | 9 | 512 | 256 |
| 11. | 10 | 1024 | 512 |

Fig. 13

| | Profile #A | Mobile Marketing | Mobile ID | QoS | Max 100KB |
|---|---|---|---|---|---|
| 1. | Profile #A-1 | 0 | 0 | 0 | 0 |
| 2. | Profile #A-2 | 0 | 0 | 30 | 30 |
| 3. | Profile #A-3 | 0 | 100 | 0 | 100 |
| 4. | Profile #A-4 | 0 | 100 | 30 | 130 |
| 5. | Profile #A-5 | 50 | 0 | 0 | 50 |
| 6. | Profile #A-6 | 50 | 0 | 30 | 80 |
| 7. | Profile #A-7 | 50 | 100 | 0 | 150 |
| 8. | Profile #A-8 | 50 | 100 | 60 | 210 |

Fig. 14

| Tier 1 | Applet 01 | Applet 02 | Applet 03 | Applet 04 | Applet 05 |
|--------|-----------|-----------|-----------|-----------|-----------|
| Tier 2 | Applet 06 | Applet 07 | Applet 08 | Applet 09 | Applet 10 |
| Tier 3 | Applet 11 | Applet 12 | Applet 13 | Applet 14 | Applet 15 |
| Tier 4 | Applet 16 | Applet 17 | Applet 18 | Applet 19 | Applet 20 |
| Tier 5 | Applet 21 | Applet 22 | Applet 23 | Applet 24 | Applet 25 |
| Tier 6 | Applet 26 | Applet 27 | Applet 28 | Applet 29 | Applet 30 |

## Fig. 15

| | SIM apps | Managed by | Applet size | SIM file creation needed | Remaining NVM space | Dependency applets |
|---|---|---|---|---|---|---|
| 1. | - | - | - | - | 800 KB | - |
| 2. | Applet #1 | MNO | 50 KB | - | 750 KB | - |
| 3. | Applet #2 | MNO | 100 KB | - | 650 KB | - |
| 4. | Applet #3 | SIM Marketplace | 300 KB | - | 350 KB | - |
| 5. | Applet #4 | SIM Marketplace | 200 KB | 50 KB | 100 KB | Applet #3 |

## Fig. 16

| | Source | DP | Transport | SIM | Destination |
|---|---|---|---|---|---|
| 1. | SIM Marketplace | MNO #1 DP MNO #2 DP MNO #3 DP | HTTP-OTA, SMSC | MNO #1 SIM MNO #2 SIM MNO #3 SIM | MNO #1 RFM MNO #2 RFM MNO #3 RFM |
| 2. | SIM Marketplace | - | HTTP-OTA, SMSC, USSD | MNO #1 SIM MNO #2 SIM MNO #3 SIM | SIM Marketplace Client |

## Fig. 17

100

101

102

103

104

Fig. 18

Europäisches
Patentamt

European
Patent Office

Office européen
des brevets

# EUROPEAN SEARCH REPORT

Application Number

EP 19 00 0197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 9 204 300 B2 (KT CORP [KR]) 1 December 2015 (2015-12-01) * figures 1-4 * * column 2, line 19 - line 62 * * column 3, line 12 - line 18 * * column 3, line 39 - line 42 * * column 5, line 30 - line 67 * * column 6, line 1 - line 23 * * column 6, line 54 - line 57 * ----- | 1-15 | INV. H04W4/60 H04W4/50 H04W8/24 H04L29/08 H04W8/18 |
| X | EP 3 402 238 A1 (GIESECKE DEVRIENT MOBILE SECURITY GMBH [DE]) 14 November 2018 (2018-11-14) * paragraph [0023] * * paragraph [0025] * * paragraph [0030] * * paragraph [0033] * ----- | 1-3,6, 13-15 | |
| X | US 9 866 987 B2 (APPLE INC [US]) 9 January 2018 (2018-01-09) * figures 4,5 * * column 2, line 47 - line 64 * * column 3, line 5 - line 44 * * column 3, line 54 - line 67 * * column 4, line 1 - line 20 * * column 9, line 36 - line 60 * * column 11, line 47 - line 67 * * column 12, line 1 - line 21 * * column 13, line 60 - line 67 * * column 14, line 1 - line 14 * ----- | 1-3,6,9, 13-15 | TECHNICAL FIELDS SEARCHED (IPC) H04W H04L |
| X | US 2016/119780 A1 (JUNG EUICHANG [KR] ET AL) 28 April 2016 (2016-04-28) * figures 4, 7A, 8 * * paragraph [0009] - paragraph [0012] * * paragraph [0057] * * paragraph [0101] - paragraph [0105] * ----- | 1,2,6,9, 12-15 | |

The present search report has been drawn up for all claims

| Place of search | Date of completion of the search | Examiner |
|---|---|---|
| Munich | 24 July 2019 | Komnios, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 00 0197

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2019

| Patent document cited in search report | | Publication date | Patent family member(s) | | | Publication date |
|---|---|---|---|---|---|---|
| US 9204300 | B2 | 01-12-2015 | KR | 20130132295 | A | 04-12-2013 |
| | | | US | 2014031012 | A1 | 30-01-2014 |
| EP 3402238 | A1 | 14-11-2018 | NONE | | | |
| US 9866987 | B2 | 09-01-2018 | CN | 104396289 | A | 04-03-2015 |
| | | | DE | 112013002437 | T5 | 22-01-2015 |
| | | | JP | 6154892 | B2 | 28-06-2017 |
| | | | JP | 2015522976 | A | 06-08-2015 |
| | | | TW | 201408110 | A | 16-02-2014 |
| | | | TW | 201538018 | A | 01-10-2015 |
| | | | US | 2013303122 | A1 | 14-11-2013 |
| | | | US | 2014349617 | A1 | 27-11-2014 |
| | | | US | 2016337780 | A1 | 17-11-2016 |
| | | | WO | 2013169484 | A1 | 14-11-2013 |
| US 2016119780 | A1 | 28-04-2016 | CN | 107079286 | A | 18-08-2017 |
| | | | EP | 3016419 | A1 | 04-05-2016 |
| | | | KR | 20160049400 | A | 09-05-2016 |
| | | | US | 2016119780 | A1 | 28-04-2016 |
| | | | US | 2019124499 | A1 | 25-04-2019 |
| | | | WO | 2016068550 | A1 | 06-05-2016 |

EPO FORM P0459

For more details about this annex : see Official Journal of the European Patent Office, No. 12/82

**EP 3 731 548 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2975870 A1
- US 9226133 B1
- US 9204300 B2